# EUROPEAN PATENT SPECIFICATION

(11) **EP 2 728 907 B1**
(45) Date of publication and mention of the grant of the patent: **24.01.2018**
(21) Application number: 12190585.5
(22) Date of filing: 30.10.2012
(51) Int. Cl.: H04W 4/00, H04W 68/00

(54) **Method for enhancing machine type communication between a mobile communication network and a machine type communication device, machine type communication device, mobile communication network, program and computer program product**
Verfahren zur Verbesserung von Maschinen-Typ-Kommunikationen zwischen einem Mobilkommunikationsnetz und einer Maschinen-Typ-Einrichtung, Maschinen-Typ-Einrichtung, Mobilkommunikationsnetz, Programm und Computerprogrammprodukt
Procédé d'amélioration de communication de type machine entre un réseau de communication mobile et un dispositif de communication de type machine, dispositif de communication de type machine, réseau de communication mobile, programme et produit de programme informatique

(43) Date of publication of application: 07.05.2014
(73) Proprietor: Deutsche Telekom AG, 53113 Bonn (DE)
(72) Inventor: Nenner, Karl Heinz, 53332 Bornheim (DE); Ponge, Stefan, 42699 Solingen (DE)
(74) Representative: Schwöbel, Thilo K.

(56) References cited:
- EP-A1- 2 456 237
- WO-A1-2012/137033
- US-A1- 2012 202 508
- ZTE: "A solution for MTC Triggering", 3GPP DRAFT; S2-110502_PCR_A SOLUTION FOR MTC TRIGGERING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 15 February 2011 (2011-02-15), pages 1-3, XP050523719, [retrieved on 2011-02-15]
- CHIASSERINI C F ET AL: "Combining paging with dynamic power management", PROCEEDINGS IEEE INFOCOM 2001. CONFERENCE ON COMPUTER COMMUNICATIONS. TWENTIETH ANNUAL JOINT CONFERENCE OF THE IEEE COMPUTER AND COMMUNICATIONS SOCIETY (CAT. NO.01CH37213); [PROCEEDINGS IEEE INFOCOM. THE CONFERENCE ON COMPUTER COMMUNICATIONS], PISCAT, vol. 2, 22 April 2001 (2001-04-22), pages 996-1004, XP010538787, DOI: 10.1109/INFCOM.2001.916292 ISBN: 978-0-7803-7016-6
- "3rd Generation Partnership Project; Technical Specification Group Services and System Aspects; System improvements for Machine-Type Communications (MTC) (Release 11)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.0.0, 18 September 2012 (2012-09-18), pages 1-165, XP050649142, [retrieved on 2012-09-18]

## Description

### BACKGROUND

The present invention relates a method for enhancing machine type communication between a mobile communication network, especially a public land mobile network, and a machine type communication device.

The present invention further relates to a machine type communication device for enhancing communication with the mobile communication network, and to a mobile communication network for enhancing machine type communication in the mobile communication network.

Machine type communication is increasingly used in cellular access networks, as well as in information and telecommunications systems in general. Examples of systems using machine type communication devices for machine type communication operations may be applied include:
-- remotely controlled power meters as well as metering machine type communication devices,
-- remotely controlled machine type communication devices for controlling functions e.g. in a home which make it possible to turn on an heating prior to arriving home.

In addition to such examples of stationary machine type communication, there are also applications of mobile machine type communication, such as remotely monitoring and/or controlling functions or status information in a car, boat, or some other kind of vehicle.

Due to the vast amount of possible applications for machine type communication, machine type communication devices and machine type communication systems, an important increase in signalling traffic and in data traffic in cellular access systems can be expected.

Release 10 of the Third Generation Partnership Project (3GPP Rel-10) refers to applications or scenarios of machine type communication (or machine to machine communication (M2M communication) scenarios) and typically defines a plurality of machine type communication devices which are controlled by a machine type communication server. The machine type communication server is a functional entity that is either part of the mobile communication network or which is located outside of the mobile communication network (belonging or operated by a machine to machine service provider) to which the machine type communication devices are connected or with which the machine type communication devices communicate.

A typical machine type communication device is connected through cellular access networks to mobile communication networks, the access networks including typically GSM (Global System of Mobile Communication) access networks, GPRS (General Packet Radio System) access networks, and/or EPS/LTE (Evolved Packet System / Long Term Evolution) access networks. Typically, a machine type communication device will have low mobility, low data consumption and infrequent communication. In addition, many, if not most, types of applications of machine type communication will be delay tolerant, i.e. they will not be real time applications, as opposed to traditional applications of cellular access networks, such as speech, streaming of data etc. In many cases, the application in which a machine type communication device is used needs the machine type communication device to report data, or it may happen that the machine type communication server needs to transmit data to the machine type communication device. This is typically realized by means of an Internet Protocol connection (IP connection) which necessitates a PDP context / IP bearer. A PDP (packet data protocol; e.g., IP, X.25, FrameRelay) context is a data structure which is typically present on both the serving GPRS support node (SGSN) and the gateway GPRS support node (GGSN). This data structure contains the session information when a session is active. When a machine type communication device wants to use GPRS, it needs first to attach and then activate a PDP context. This allocates a PDP context data structure in the serving GPRS support node that the machine type communication device is currently visiting and the serving GPRS support node that is serving the access point used by the machine type communication device.

Typically, a machine type communication device that, at a point in time, is not reachable via an Internet Protocol connection (IP connection), i.e. it has no PDP context / IP bearer or that it uses NAT (Network Address Translation) such that at least parts of the machine type communication device are not reachable, is typically triggered by a short message (SMS, Short Message System) to perform an action (such as starting a service within the machine type communication device) that ultimately establishes a connection to an Internet Protocol server.

However, the use of a short message (SMS) involves comparably high costs in term of signalling overhead and/or delay and/or requirements on the side of the machine type communication device, such as a process (in the machine type communication device) that is capable to react to incoming short messages and to parse their content. The patent publication EP 2456 237 A1 shows various ways of controlling the operation of an M2M device.

### SUMMARY

An object of the present invention is to provide a technically simple, effective and especially cost effective solution for enabling an enhanced machine type communication between a mobile communication network on the one hand and a machine type communication device on the other hand. A further object of the present invention is to provide an interface device for enhancing machine type communication with a mobile communication network, a machine type communication device comprising an interface device and a processing device, as well as a mobile communication network for enhancing machine type communication with a machine type communication device that allow for an efficient communication between the machine type communication and the mobile communication network with reduced overhead and signalling communication and with reduce response times.

The object of the present invention is achieved by means of the appended independent claims. A further embodiment relates to a method for enhancing machine type communication between a mobile communication network on the one hand and a machine type communication device on the other hand, wherein the machine type communication device comprises an interface device and a processing device,
wherein the interface device is able - after having performed an attachment procedure - to be attached to the mobile communication network in the manner of a user equipment of the mobile communication network,
wherein the processing device is configured to be operated in a first mode of operation and at least a second mode of operation, wherein the method comprises the following steps:
-- in a first step, in case that the processing device is in its first mode of operation, the interface device receives a paging message from the mobile communication network, the paging message being addressed, by the mobile communication network, to the interface device,
-- in a second step, the interface device triggers the processing device to change from the first mode of operation to the second mode of operation.

It is thereby advantageously possible according to the present invention that a machine type communication device - or at least parts thereof, namely the processing device - can be triggered to establish an Internet Protocol connection with the mobile communication network without the necessity to use a short message. This allows for less requirements within the machine type communication device, especially within the interface device of the machine type communication device, such that the machine type communication device (especially the interface device of the machine type communication device) can be provided (at manufacturing time) less costly and with less complexity, and that (when operating the machine type communication device) it is possible to have a lower energy consumption associated with the machine type communication device such that battery drain is reduced and hence battery life time expanded.

According to the present invention, it is advantageously possible that a wake-on-paging functionality is realized such that upon the paging message, transmitted by the mobile communication network to the machine type communication device, parts of the machine type communication device, especially the processing device, can be woken up at an arbitrary point in time either by connecting to the power source or by initiating a wake-up procedure.

According to a preferred embodiment of the present invention, prior to the interface device receiving the paging message, the interface device is in a state attached to the mobile communication network. This means that preferably, the machine type communication, especially the interface device of the machine type communication device, is in an attached state whenever the paging message should have the consequence to wake up parts of the machine type communication device, i.e. the processing device.

Thereby, it is advantageously possible that the processing device can be switched off during all time intervals that do not require an Internet Protocol connection established between the mobile communication network and the machine type communication device.

According to a further preferred embodiment of the present invention, the first mode of operation of the processing device corresponds to an inactivated mode of operation or a reduced power mode or a power-off mode, wherein the second mode of operation of the processing device corresponds to an activated mode of operation where an Internet Protocol connection (IP connection) of the processing device via the mobile communication network is active.

Thereby, it is advantageously possible to provide a wake up mechanism for at least a part of the machine type communication device or for parts of the machine type communication device.

Furthermore, according to an embodiment of the present invention, it is preferred that the processing device, when entering the second mode of operation, operates according to a predefined scheme. According to the present invention, such a predefined scheme is a scheme that is
-- stored within the machine type communication device and preferably within the processing device of the machine type communication device
-- at a moment in time when the processing device is still in the first mode of operation (i.e. in sleeping mode or shutdown mode).
This means the predetermined scheme corresponds, e.g., to a starting script or booting script or other instruction (e.g. as part of a firm ware or other piece of software) that is invoked upon (re)start of the processing device.

Thereby, it is advantageously possible to trigger the machine type communication device such that all the necessary components of the machine type communication device are started such that an internet protocol communication with the mobile communication network or via the mobile communication network (e.g. to a server device within the mobile communication network or outside of the mobile communication network) can be established.

According to a further preferred embodiment of the present invention, the paging message addressed to the interface device comprises a command information related to the mode of operation of the processing device or related to an action to be performed by the processing device, wherein the processing device, when entering the second mode of operation, operates dependent on the command information of the paging message. According to the present invention, such a command information is a piece of information that is transmitted with that paging message to the machine type communication device (especially to the interface device of the machine type communication device) such that one behaviour out of a plurality of possible behaviours of the machine type communication device (upon entering the second mode of operation of the processing device) is chosen by means of the command information. This means the command information may comprise control parameters or command parameters such that a specific action is performed by the processing device or that a specific sensor value (or pluralities of values) are transmitted without necessitating further requests or commands issued by the machine type communication server or other server entity to which the Internet Protocol connection is established.

Thereby, it is advantageously possible to flexibly trigger the machine type communication device by means of the command information as part of the paging message.

According to the present invention, it is furthermore preferred that the paging message associated with the command information is a new (i.e. not standard, according at least to the present standardization status) paging message. Such a paging message would be able to be (correctly) interpreted ("understood") by the specific machine type communication device (especially the interface device of the machine type communication device) to which such a non-standard paging message is directed, but it would not generally be able to be (correctly, i.e. in the intended manner) interpreted by an arbitrary machine type communication device/interface device. It is advantageously possible according to such an embodiment of the present invention to, e.g., be able to trigger the machine type communication device to start (or boot) the processing device part of the machine type communication device and loading a new firmware software once the Internet Protocol connection is established.

Furthermore, according to an embodiment of the present invention, it is preferred that the mobile communication network is connected with a machine type communication server, the machine type communication server providing a timing scheme information to the mobile communication network, wherein paging messages are sent to the machine type communication device and according to the timing scheme without involving the machine type communication server.

Thereby, it is advantageously possible to handle such timing schemes flexibly and efficiently by the mobile communication network (and therefore without involving the machine type communication server at every paging time (or wake up time)).

Furthermore, a further embodiment of the present invention relates to an interface device for enhancing machine type communication with a mobile communication network, the interface device being configured to be connected to a processing device and to form a machine type communication device, wherein the interface device is able - after having performed an attachment procedure - to be attached to the mobile communication network in the manner of a user equipment of the mobile communication network, wherein the processing device is configured to be operated in a first mode of operation and at least a second mode of operation, wherein in case that the processing device is in its first mode of operation and an Internet Protocol connection is required to be established between the mobile communication network and the machine type communication device, the interface device receives a paging message from the mobile communication network, the paging message being addressed, by the mobile communication network, to the interface device, wherein the interface device is configured to trigger the processing device to change from the first mode of operation to the second mode of operation.

Thereby, it is advantageously possible to use such an interface device in connection with a processing device. The interface device can be provided in a more cost effective manner than according to the prior art because no SMS functionality needs to be provided for.

Additionally, a further embodiment of the present invention relates to a machine type communication device comprising an interface device and a processing device, the machine type communication device being provided for enhancing machine type communication with a mobile communication network, wherein the interface device is able - after having performed an attachment procedure - to be attached to the mobile communication network in the manner of a user equipment of the mobile communication network, wherein the processing device is configured to be operated in a first mode of operation and at least a second mode of operation, wherein in case that the processing device is in its first mode of operation and an Internet Protocol connection is required to be established between the mobile communication network and the machine type communication device, the interface device receives a paging message from the mobile communication network, the paging message being addressed, by the mobile communication network, to the interface device, wherein the interface device is configured to trigger the processing device to change from the first mode of operation to the second mode of operation.

Thereby, it is advantageously possible to use such a machine type communication device comprising an interface device and a processing device. The interface device (and hence the machine type communication device) can be provided in a more cost effective manner than according to the prior art because no SMS functionality need to be provided for.

It is furthermore preferred according to the present invention - also with respect to the machine type communication device - that the first mode of operation of the processing device corresponds to an inactivated mode of operation or a reduced power mode, wherein the second mode of operation of the processing device corresponds to an activated mode of operation where an Internet Protocol connection (IP connection) of the processing device via the mobile communication network is active.

It is furthermore preferred according to the present invention - also with respect to the machine type communication device - that the processing device is configured such that, when entering the second mode of operation, it operates according to a predefined scheme.

It is furthermore preferred according to the present invention - also with respect to the machine type communication device - that the paging message addressed to the interface device comprises a command information related to the mode of operation of the processing device or related to an action to be performed by the processing device, wherein the processing device is configured such that, when entering the second mode of operation, it operates dependent on the command information of the paging message.

Additionally, a further embodiment of the present invention relates to a mobile communication network for enhancing machine type communication with a machine type communication device, wherein the machine type communication device comprises an interface device and a processing device, wherein the interface device is able - after having performed an attachment procedure - to be attached to the mobile communication network in the manner of a user equipment of the mobile communication network, wherein the processing device is configured to be operated in a first mode of operation and at least a second mode of operation, wherein in case that the processing device is in its first mode of operation and an Internet Protocol connection is required to be established between the mobile communication network and the machine type communication device, the mobile communication network generates a paging message addressed to the interface device, wherein the interface device is configured to trigger the processing device to change from the first mode of operation to the second mode of operation.

Additionally, a further embodiment of the present invention relates to a program comprising a computer readable program code which, when executed on a computer or on machine type communication device or on a network component of a mobile communication network, causes the computer or the machine type communication device or the network component of the mobile communication network to perform the inventive method.

Still additionally, a further embodiment of the present invention relates to computer program product for using a machine type communication device with a mobile communication network, the computer program product comprising a computer program stored on a storage medium, the computer program comprising program code which, when executed on a computer or on machine type communication device or on a network component of a mobile communication network, causes the computer or the machine type communication device or the network component of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention, which is defined in the independent claims. The reference figures quoted below refer to the attached drawings.

### BRIEF DESCRIPTION OF THE DRAWINGS

Figure 1 schematically illustrates a mobile communication network that is enabled for enhanced machine type communication with a machine type communication device.
Figures 2 and 5 schematically illustrate the general communication diagrams between a base transceiver station of a mobile communication network and a machine type communication device according to the present invention.
Figure 3 schematically illustrates the communication diagram between a base transceiver station of a mobile communication network and a machine type communication device for a power-on-paging or wake-on paging function.
Figure 4 schematically illustrates the communication diagram between a base transceiver station of a mobile communication network and a machine type communication device for a reset-on-paging function.
Figure 5 schematically illustrates the communication diagram between a base transceiver station of a mobile communication network and a machine type communication device whereby the additional information transmitted in the paging message is retrieved by the processing device.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

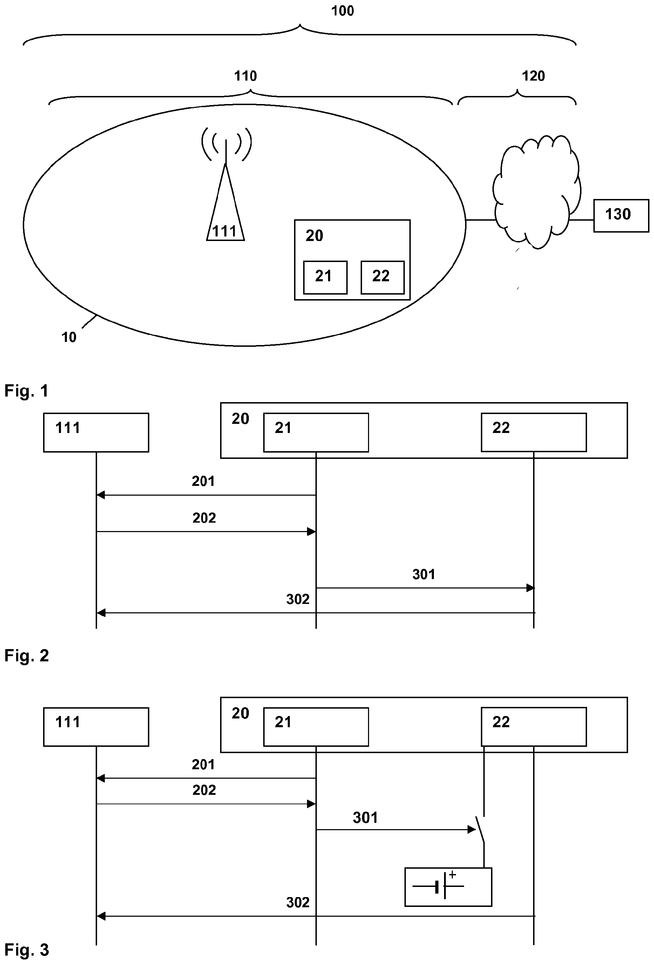

In Figure 1, a mobile communication network 100, especially a public land mobile network 100, is schematically shown, the mobile communication network 100 comprising an access network 110 and a core network 120. The mobile communication network 100 is preferably a cellular telecommunications network comprising typically a plurality of network cells, one of which is represented in Figure 1 by means of a solid line and reference sign 10. In the mobile communication network 100, typically a plurality of user equipments and/or machine type communication devices are camping on the telecommunications network 100 within the network cell 10, i.e. the user equipments and/or machine type communication devices are connected or are camping on a base transceiver station 111 serving the cell 10. The base transceiver station 111 is typically a base station, e.g. a NodeB or an eNodeB base transceiver station.

A machine type communication device is schematically represented by means of reference sign 20. The machine type communication device 20 comprises an interface device 21 and a processing device 22.

The interface device 21 is typically a machine to machine module or a machine to machine terminal, i.e. comprising a mobile communication interface to the mobile communication network 100, which means the communication of the machine type communication device 20 with the base transceiver station 111 occurs via the interface device 21.

The processing device 22 is typically an arbitrary computer or processing device, typically comprising
-- a sensor or a plurality of sensors or
-- an actuator or a plurality of actuators or
-- a sensor and an actuator or a plurality of sensors and/or a plurality of a actuators
-- a microprocessor with interfaces to memory, the sensors / actuators and the interface device

The processing device 22 is connected with the interface device 21 such that a control line is available to the interface device 21 for applying at least a power-on switch or a boot (or wake up) command to the processing device 22, i.e. the interface device 21 provides or transmits a signal to the processing device 22 (in its first mode of operation, i.e. in sleeping mode or shut down state) such that the processing device is waken up (or booted). According to the present invention, further kinds of control lines or possible commands can exist between the interface device 21 and the processing device 22 within the machine type communication device 20, .e.g. a possibility to restart the processing device 22.

The telecommunications network 100 allows at least in parts of the telecommunications network 100 that user equipments 20, 21, 22 use device to device communication services. Especially, the base transceiver station 111 is enabled for allowing the user equipments 20, 21, 22 to conduct device to device communication services. The user equipments 20, 21, 22 are also enabled for device to device communication.

The core network 120 is only schematically shown by means of a cloud representation. The public land mobile network 100 (especially the core network 120) comprises typically various network elements such as an MSC (Mobile Switching Center), a SGSN (Serving GPRS Support Node), a MME (Mobility Management Entity), preferably a plurality of network element thereof.

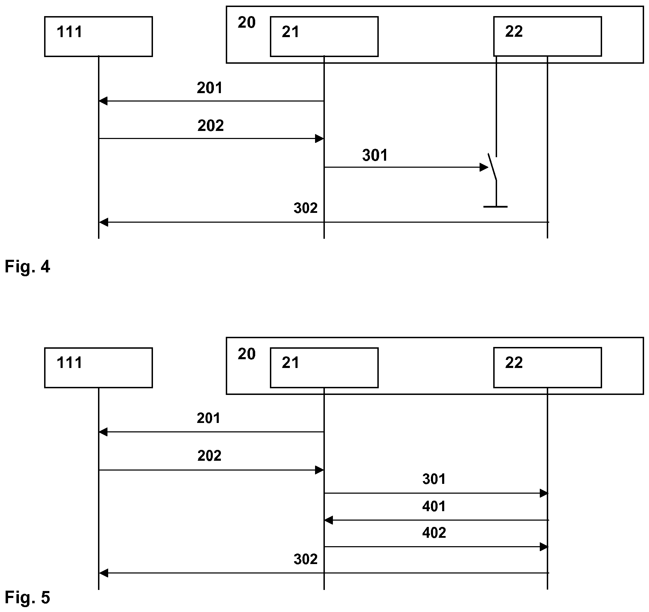

In Figures 2 and 5, communication diagrams between the base transceiver station 111 (i.e. the mobile communication network 100) and the machine type communication device 20 (i.e. to the interface device 21 part of the machine type communication device 20 and the processing device 22 part of the machine type communication device 20) according to the present invention are schematically shown.

According to the present invention, the machine type communication device 20 attaches to the mobile communication network 100 by means of a first message 201 from the interface device 21 to the base transceiver station 111 (i.e. to the mobile communication network 100), cf. Figures 2 and 5.

By means of a second message 202 from the base transceiver station 111 (i.e. from the mobile communication network 100) to the interface device 21 of the machine type communication device 20, it is possible according to the present invention to trigger the machine type communication device 20 to perform a certain operation, especially to wake up (or boot) the processing device 22 of the machine type communication device 20. The actual boot (or wake up) command or signal corresponds to a third message 301 from the interface device 21 to the processing device 22 (interior to the machine type communication device 20), cf. Figures 2 and 5.

After the booting operation or wake up operation of the processing device 22 is completed an Internet Protocol connection can be established between the processing device 22 of the machine type communication device 20 to the mobile communication network 100, i.e. to the base transceiver station 111. This is represented by means of a fourth message 302, cf. Figures 2 and 5.

According to the embodiment or variant depicted in Figure 5, after the booting operation or wake up operation of the processing device 22 is completed, a communication can be established between the processing device 22 of the machine type communication device 20 and the the interface device 21 to query additional information with message 401 and retrieve the information transported in the paging message. This is represented by means of message 402. The additional information transported by the paging message correspond to the command information transported by the paging message or comprised by the paging message (and addressed to the interface device 21), wherein the command information is related to the mode of operation of the processing device 22 (e.g. booting the processing device 22 or restarting the processing device 22) or related to an action to be performed by the processing device 22 (e.g. connecting to a specific internet server defined by means of an Internet Protocol address being part of the command information or an Internet Protocol address stored in the processing device 22 but referred to by the command information).

In Figure 3, a communication diagram between a base transceiver station 111 of a mobile communication network 100 and a machine type communication device 20 for a further embodiment of the present invention is schematically shown, namely for realizing a power-on-paging or wake-on paging function. The third message 301 (cf. Figure 2) corresponds, according to the embodiment of Figure 3 to actuating a switch or changing the high or low level (electrical potential) of a signalling line (electrical conductor line) between the interface device 21 and the processing device 22 of the machine type communication device 20.

In Figure 4, a communication diagram between a base transceiver station 111 of a mobile communication network 100 and a machine type communication device 20 for still another embodiment of the present invention is schematically shown, namely for a reset-on-paging function. The third message 301 (cf. Figure 2) corresponds, according to the embodiment of Figure 4 to actuating a switch or changing the high or low level (electrical potential) of a signalling line (electrical conductor line) between the interface device 21 and the processing device 22 of the machine type communication device 20.

## Claims

1. Method for enhancing machine type communication between a mobile communication network (100) on the one hand and a machine type communication device (20) on the other hand, wherein the machine type communication device (20) comprises an interface device (21) and a processing device (22),
wherein the interface device (21) is able - after having performed an attachment procedure - to be attached to the mobile communication network (100) in the manner of a user equipment of the mobile communication network (100),
wherein the processing device (22) is configured to be operated in a first mode of operation and at least a second mode of operation, wherein the method comprises the following steps:
-- in a first step, in case that the processing device (22) is in its first mode of operation, the interface device (21) receives a paging message from the mobile communication network (100), the paging message being addressed, by the mobile communication network (100), to the interface device (21),
-- in a second step, the interface device (21) triggers the processing device (22) to change from the first mode of operation to the second mode of operation,
wherein the paging message addressed to the interface device (21) comprises a command information related to the mode of operation of the processing device (22) or related to an action to be performed by the processing device (22), wherein the processing device (22), when entering the second mode of operation, operates dependent on the command information of the paging messages, **characterised in that** the command information comprises an Internet Protocol address or wherein an Internet Protocol address is stored in the processing device (22) and referred to by the command information, wherein the action to be performed by the processing device (22) at least comprises connecting to a specific internet server defined by means of the Internet Protocol address.

2. Method according to claim 1, wherein prior to the interface device (21) receiving the paging message, the interface device (21) is in a state attached to the mobile communication network (100).

3. Method according to one of the preceding claims, wherein the first mode of operation of the processing device (22) corresponds to an inactivated mode of operation or a reduced power mode, wherein the second mode of operation of the processing device (22) corresponds to an activated mode of operation where an Internet Protocol connection (IP connection) of the processing device (22) via the mobile communication network (100) is active.

4. Method according to one of the preceding claims, wherein the processing device (22), when entering the second mode of operation, operates according to a predefined scheme.

5. Method according to one of the preceding claims, wherein the mobile communication network (100) is connected with a machine type communication server (130), the machine type communication server (130) providing a timing scheme information to the mobile communication network (100), wherein paging messages are sent to the machine type communication device (20) and according to the timing scheme without involving the machine type communication server (130).

6. interface device (21) for enhancing machine type communication with a mobile communication network (100), the interface device (21) being configured to be connected to a processing device (22) and to form a machine type communication device (20), wherein the interface device (21) is able - after having performed an attachment procedure - to be attached to the mobile communication network (100) in the manner of a user equipment of the mobile communication network (100), wherein the processing device (22) is configured to be operated in a first mode of operation and at least a second mode of operation, wherein in case that the processing device (22) is in its first mode of operation and an Internet Protocol connection is required to be established between the mobile communication network (100) and the machine type communication device (20), the interface device (21) receives a paging message from the mobile communication network (100), the paging message being addressed, by the mobile communication network (100), to the interface device (21), wherein the interface device (21) is configured to trigger the processing device (22) to change from the first mode of operation to the second mode of operation, wherein the paging message addressed to the interface device (21) comprises a command information related to the mode of operation of the processing device (22) or related to an action to be performed by the processing device (22), wherein the processing device (22), when entering the second mode of operation, operates dependent on the command information of the paging message, **characterised in that** the command information comprises an Internet Protocol address or wherein an Internet Protocol address is stored in the processing device (22) and referred to by the command information, wherein the action to be performed by the processing device (22) at least comprises connecting to a specific internet server defined by means of the Internet Protocol address.

7. Machine type communication device (20) comprising an interface device (21) and a processing device (22), the machine type communication device (20) being provided for enhancing machine type communication with a mobile communication network (100), wherein the interface device (21) is able - after having performed an attachment procedure - to be attached to the mobile communication network (100) in the manner of a user equipment of the mobile communication network (100), wherein the processing device (22) is configured to be operated in a first mode of operation and at least a second mode of operation, wherein in case that the processing device (22) is in its first mode of operation and an Internet Protocol connection is required to be established between the mobile communication network (100) and the machine type communication device (20), the interface device (21) receives a paging message from the mobile communication network (100), the paging message being addressed, by the mobile communication network (100), to the interface device (21), wherein the interface device (21) is configured to trigger the processing device (22) to change from the first mode of operation to the second mode of operation, wherein the paging message addressed to the interface device (21) comprises a command information related to the mode of operation of the processing device (22) or related to an action to be performed by the processing device (22), wherein the processing device (22), when entering the second mode of operation, operates dependent on the command information of the paging message, **characterised in that** the command information comprises an Internet Protocol address or wherein an Internet Protocol address is stored in the processing device (22) and referred to by the command information, wherein the action to be performed by the processing device (22) at least comprises connecting to a specific internet server defined by means of the Internet Protocol address.

8. Machine type communication device (20) according to claim 7, wherein the first mode of operation of the processing device (22) corresponds to an inactivated mode of operation or a reduced power mode, wherein the second mode of operation of the processing device (22) corresponds to an activated mode of operation where an Internet Protocol connection (IP connection) of the processing device (22) via the mobile communication network (100) is active.

9. Machine type communication device (20) according to claim 7 or 8, wherein the processing device (22) is configured such that, when entering the second mode of operation, it operates according to a predefined scheme.

10. Machine type communication device (20) according to one of claims 7 to 9, wherein the paging message addressed to the interface device (21) comprises a command information related to the mode of operation of the processing device (22) or related to an action to be performed by the processing device (22), wherein the processing device (22) is configured such that, when entering the second mode of operation, it operates dependent on the command information of the paging message.

11. Mobile communication network (100) for enhancing machine type communication with a machine type communication device (20), wherein the machine type communication device (20) comprises an interface device (21) and a processing device (22), wherein the interface device (21) is able - after having performed an attachment procedure - to be attached to the mobile communication network (100) in the manner of a user equipment of the mobile communication network (100), wherein the processing device (22) is configured to be operated in a first mode of operation and at least a second mode of operation, wherein in case that the processing device (22) is in its first mode of operation and an Internet Protocol connection is required to be established between the mobile communication network (100) and the machine type communication device (20), the mobile communication network (100) generates a paging message addressed to the interface device (21), wherein the interface device (21) is configured to trigger the processing device (22) to change from the first mode of operation to the second mode of operation, wherein the paging message addressed to the interface device (21) comprises a command information related to the mode of operation of the processing device (22) or related to an action to be performed by the processing device (22), wherein the processing device (22), when entering the second mode of operation, operates dependent on the command information of the paging message, **characterised in that** the command information comprises an Internet Protocol address or wherein an Internet Protocol address is stored in the processing device (22) and referred to by the command information, wherein the action to be performed by the processing device (22) at least comprises connecting to a specific internet server defined by means of the Internet Protocol address.

12. Program comprising a computer readable program code which, when executed on a computer or on machine type communication device (20) or on a network component of a mobile communication network (100), causes the computer or the machine type communication device (20) or the network component of the mobile communication network (100) to perform a method according one of claims 1 to 5.

13. Computer program product for using a machine type communication device (20) with a mobile communication network (100), the computer program product comprising a computer program stored on a storage medium, the computer program comprising program code which, when executed on a computer or on machine type communication device (20) or on a network component of a mobile communication network (100), causes the computer or the machine type communication device (20) or the network component of the mobile communication network (100) to perform a method according one of claims 1 to 5.

## Patentansprüche

1. Verfahren zum Verbessern von Maschinen-Typ-Kommunikation zwischen einem mobilen Kommunikationsnetz (100) auf der einen Seite und einer Maschinen-Typ-Kommunikations-Einrichtung (20) auf der anderen Seite, wobei die Maschinen-Typ-Kommunikations-Einrichtung (20) eine Schnittstelleneinrichtung (21) und eine Verarbeitungseinrichtung (22) umfasst,
wobei die Schnittstelleneinrichtung (21) nach dem Durchführen einer Anschlussprozedur in der Lage ist, in der Art eines Anwendergeräts des Mobilkommunikationsnetzes (100) an das Mobilkommunikationsnetz (100) angeschlossen zu werden,
wobei die Verarbeitungseinrichtung (22) dazu ausgelegt ist, in einem ersten Betriebsmodus und wenigstens einem zweiten Betriebsmodus betrieben zu werden, wobei das Verfahren die folgenden Schritte umfasst:
- falls sich die Verarbeitungseinrichtung (22) in ihrem ersten Betriebsmodus befindet, empfängt die Schnittstelleneinrichtung (21) in einem ersten Schritt eine Paging-Nachricht aus dem Mobilkommunikationsnetz (100), wobei die Paging-Nachricht durch das Mobilkommunikationsnetz (100) an die Schnittstelleneinrichtung (21) adressiert wird,
- die Schnittstelleneinrichtung (21) triggert in einem zweiten Schritt die Verarbeitungseinrichtung (22) dazu, vom ersten Betriebsmodus in den zweiten Betriebsmodus zu wechseln,
wobei die an die Schnittstelleneinrichtung (21) adressierte Paging-Nachricht Befehlsinformationen umfasst, die sich auf den Betriebsmodus der Verarbeitungseinrichtung (22) oder auf eine Aktion, die von der Verarbeitungseinrichtung (22) durchgeführt werden soll, beziehen, wobei die Verarbeitungseinrichtung (22), wenn sie in den zweiten Betriebsmodus eintritt, abhängig von den Befehlsinformationen der Paging-Nachricht arbeitet,
**dadurch gekennzeichnet, dass** die Befehlsinformationen eine Internet-Protokoll-Adresse umfassen oder wobei eine Internet-Protokoll-Adresse in der Verarbeitungseinrichtung (22) gespeichert wird und darauf durch die Befehlsinformationen Bezug genommen wird, wobei die Aktion, die von der Verarbeitungseinrichtung (22) durchgeführt werden soll, wenigstens das Verbinden mit einem spezifischen Internet-Server umfasst, der mittels der Internet-Protokoll-Adresse definiert ist.

2. Verfahren nach Anspruch 1, wobei sich, bevor die Schnittstelleneinrichtung (21) die Paging-Nachricht empfängt, die Schnittstelleneinrichtung (21) in einem Zustand befindet, dass sie an das Mobilkommunikationsnetz (100) angeschlossen ist.

3. Verfahren nach einem der vorhergehenden Ansprüche, wobei der erste Betriebsmodus der Verarbeitungseinrichtung (22) einem inaktivierten Betriebsmodus oder einem Betrieb mit reduzierter Leistung entspricht, wobei der zweite Betriebsmodus der Verarbeitungseinrichtung (22) einem aktivierten Betriebsmodus, in dem eine Internet-Protokoll-Verbindung (IP-Verbindung) der Verarbeitungseinrichtung (22) über das Mobilkommunikationsnetz (100) aktiv ist, entspricht.

4. Verfahren nach einem der vorhergehenden Ansprüche, wobei die Verarbeitungseinrichtung (22) nach einem vordefinierten Schema arbeitet, wenn sie in den zweiten Betriebsmodus eintritt.

5. Verfahren nach einem der vorhergehenden Ansprüche, wobei das Mobilkommunikationsnetz (100) mit einem Maschinen-Typ-Kommunikations-Server (130) verbunden ist, wobei der Maschinen-Typ-Kommunikations-Server (130) Zeitschema-Informationen für das Mobilkommunikationsnetz (100) bereitstellt, wobei Paging-Nachrichten an die Maschinen-Typ-Kommunikations-Einrichtung (20) und nach dem Zeitschema gesendet werden, ohne den Maschinen-Typ-Kommunikations-Server (130) einzubeziehen.

6. Schnittstelleneinrichtung (21) zum Verbessern von Maschinen-Typ-Kommunikation mit einem Mobilkommunikationsnetz (100), wobei die Schnittstelleneinrichtung (21) so ausgelegt ist, dass sie mit einer Verarbeitungseinrichtung (22) verbunden wird und eine Maschinen-Typ-Kommunikations-Einrichtung (20) bildet, wobei die Schnittstelleneinrichtung (21) nach dem Durchführen einer Anschlussprozedur in der Lage ist, in der Art eines Anwendergeräts des Mobilkommunikationsnetzes (100) an das Mobilkommunikationsnetz (100) angeschlossen zu werden, wobei die Verarbeitungseinrichtung (22) dazu ausgelegt ist, in einem ersten Betriebsmodus und wenigstens einem zweiten Betriebsmodus betrieben zu werden, wobei, falls sich die Verarbeitungseinrichtung (22) in ihrem ersten Betriebsmodus befindet und erforderlich ist, dass eine Internet-Protokoll-Verbindung zwischen dem Mobilkommunikationsnetz (100) und der M Maschinen-Typ-Kommunikations-Einrichtung (20) eingerichtet wird, die Schnittstelleneinrichtung (21) eine Paging-Nachricht aus dem Mobilkommunikationsnetz (100) empfängt, wobei die Paging-Nachricht durch das Mobilkommunikationsnetz (100) an die Schnittstelleneinrichtung (21) adressiert wird, wobei die Schnittstelleneinrichtung (21) dazu ausgelegt ist, die Verarbeitungseinrichtung (22) dazu zu triggern, vom ersten Betriebsmodus in den zweiten Betriebsmodus zu wechseln, wobei die an die Schnittstelleneinrichtung (21) adressierte Paging-Nachricht Befehlsinformationen umfasst, die sich auf den Betriebsmodus der Verarbeitungseinrichtung (22) oder auf eine Aktion, die von der Verarbeitungseinrichtung (22) durchgeführt werden soll, beziehen, wobei die Verarbeitungseinrichtung (22), wenn sie in den zweiten Betriebsmodus eintritt, abhängig von den Befehlsinformationen der Paging-Nachricht arbeitet,
**dadurch gekennzeichnet, dass** die Befehlsinformationen eine Internet-Protokoll-Adresse umfassen oder wobei eine Internet-Protokoll-Adresse in der Verarbeitungseinrichtung (22) gespeichert wird und darauf durch die Befehlsinformationen Bezug genommen wird, wobei die Aktion, die von der Verarbeitungseinrichtung (22) durchgeführt werden soll, wenigstens das Verbinden mit einem spezifischen Internet-Server umfasst, der mittels der Internet-Protokoll-Adresse definiert ist.

7. Maschinen-Typ-Kommunikations-Einrichtung (20), die eine Schnittstelleneinrichtung (21) und eine Verarbeitungseinrichtung (22) umfasst, wobei die Maschinen-Typ-Kommunikations-Einrichtung (20) zum Verbessern von Maschinen-Typ-Kommunikation mit einem Mobilkommunikationsnetz (100) bereitgestellt wird, wobei die Schnittstelleneinrichtung (21) nach dem Durchführen einer Anschlussprozedur in der Lage ist, in der Art eines Anwendergeräts des Mobilkommunikationsnetzes (100) an das Mobilkommunikationsnetz (100) angeschlossen zu werden, wobei die Verarbeitungseinrichtung (22) dazu ausgelegt ist, in einem ersten Betriebsmodus und wenigstens einem zweiten Betriebsmodus betrieben zu werden, wobei, falls sich die Verarbeitungseinrichtung (22) in ihrem ersten Betriebsmodus befindet und erforderlich ist, dass eine Internet-Protokoll-Verbindung zwischen dem Mobilkommunikationsnetz (100) und der Maschinen-Typ-Kommunikations-Einrichtung (20) eingerichtet wird, die Schnittstelleneinrichtung (21) eine Paging-Nachricht aus dem Mobilkommunikationsnetz (100) empfängt, wobei die Paging-Nachricht durch das Mobilkommunikationsnetz (100) an die Schnittstelleneinrichtung (21) adressiert wird, wobei die Schnittstelleneinrichtung (21) dazu ausgelegt ist, die Verarbeitungseinrichtung (22) dazu zu triggern, vom ersten Betriebsmodus in den zweiten Betriebsmodus zu wechseln, wobei die an die Schnittstelleneinrichtung (21) adressierte Paging-Nachricht Befehlsinformationen umfasst, die sich auf den Betriebsmodus der Verarbeitungseinrichtung (22) oder auf eine Aktion, die von der Verarbeitungseinrichtung (22) durchgeführt werden soll, beziehen, wobei die Verarbeitungseinrichtung (22), wenn sie in den zweiten Betriebsmodus eintritt, abhängig von den Befehlsinformationen der Paging-Nachricht arbeitet,
**dadurch gekennzeichnet, dass** die Befehlsinformationen eine Internet-Protokoll-Adresse umfassen oder wobei eine Internet-Protokoll-Adresse in der Verarbeitungseinrichtung (22) gespeichert wird und darauf durch die Befehlsinformationen Bezug genommen wird, wobei die Aktion, die von der Verarbeitungseinrichtung (22) durchgeführt werden soll, wenigstens das Verbinden mit einem spezifischen Internet-Server umfasst, der mittels der Internet-Protokoll-Adresse definiert ist.

8. Maschinen-Typ-Kommunikations-Einrichtung (20) nach Anspruch 7, wobei der erste Betriebsmodus der Verarbeitungseinrichtung (22) einem inaktivierten Betriebsmodus oder einem Modus mit reduzierter Leistung entspricht, wobei der zweite Betriebsmodus der Verarbeitungseinrichtung (22) einem aktivierten Betriebsmodus entspricht, bei dem eine Internet-Protokoll-Verbindung (IP-Verbindung) der Verarbeitungseinrichtung (22) über das Mobilkommunikationsnetz (100) aktiv ist.

9. Maschinen-Typ-Kommunikations-Einrichtung (20) nach Anspruch 7 oder 8, wobei die Verarbeitungseinrichtung (22) so ausgelegt ist, dass sie nach einem vordefinierten Schema arbeitet, wenn sie in den zweiten Betriebsmodus eintritt.

10. Maschinen-Typ-Kommunikations-Einrichtung (20) nach einem der Ansprüche 7 bis 9, wobei die an die Schnittstelleneinrichtung (21) adressierte Paging-Nachricht Befehlsinformationen umfasst, die sich auf den Betriebsmodus der Verarbeitungseinrichtung (22) oder auf eine Aktion, die von der Verarbeitungseinrichtung (22) durchgeführt werden soll, beziehen, wobei die Verarbeitungseinrichtung (22) so ausgelegt ist, dass sie abhängig von den Befehlsinformationen der Paging-Nachricht arbeitet, wenn sie in den zweiten Betriebsmodus eintritt.

11. Mobilkommunikationsnetz (100) zum Verbessern von Maschinen-Typ-Kommunikation mit einer Maschinen-Typ-Kommunikations-Einrichtung (20), wobei die Maschinen-Typ-Kommunikations-Einrichtung (20) eine Schnittstelleneinrichtung (21) und eine Verarbeitungseinrichtung (22) umfasst, wobei die Schnittstelleneinrichtung (21) nach dem Durchführen einer Anschlussprozedur in der Lage ist, in der Art eines Anwendergeräts des Mobilkommunikationsnetzes (100) an das Mobilkommunikationsnetz (100) angeschlossen zu werden, wobei die Verarbeitungseinrichtung (22) dazu ausgelegt ist, in einem ersten Betriebsmodus und wenigstens einem zweiten Betriebsmodus betrieben zu werden, wobei, falls sich die Verarbeitungseinrichtung (22) in ihrem ersten Betriebsmodus befindet und erforderlich ist, dass eine Internet-Protokoll-Verbindung zwischen dem Mobilkommunikationsnetz (100) und der Maschinen-Typ-Kommunikations-Einrichtung (20) eingerichtet wird, das Mobilkommunikationsnetz (100) eine Paging-Nachricht generiert, die an die Schnittstelleneinrichtung (21) adressiert ist, wobei die Schnittstelleneinrichtung (21) dazu ausgelegt ist, die Verarbeitungseinrichtung (22) dazu zu triggern, vom ersten Betriebsmodus in den zweiten Betriebsmodus zu wechseln, wobei die an die Schnittstelleneinrichtung (21) adressierte Paging-Nachricht Befehlsinformationen umfasst, die sich auf den Betriebsmodus der Verarbeitungseinrichtung (22) oder auf eine Aktion, die von der Verarbeitungseinrichtung (22) durchgeführt werden soll, beziehen, wobei die Verarbeitungseinrichtung (22), wenn sie in den zweiten Betriebsmodus eintritt, abhängig von den Befehlsinformationen der Paging-Nachricht arbeitet,
**dadurch gekennzeichnet, dass** die Befehlsinformationen eine Internet-Protokoll-Adresse umfassen oder wobei eine Internet-Protokoll-Adresse in der Verarbeitungseinrichtung (22) gespeichert wird und darauf durch die Befehlsinformationen Bezug genommen wird, wobei die Aktion, die von der Verarbeitungseinrichtung (22) durchgeführt werden soll, wenigstens das Verbinden mit einem spezifischen Internet-Server umfasst, der mittels der Internet-Protokoll-Adresse definiert ist.

12. Programm, das einen computerlesbaren Programmcode umfasst, der, wenn er auf einem Computer oder auf einer Maschinen-Typ-Kommunikations-Einrichtung (20) oder auf einer Netzkomponente eines Mobilkommunikationsnetzes (100) ausgeführt wird, bewirkt, dass der Computer oder die Maschinen-Typ-Kommunikations-Einrichtung (20) oder die Netzkomponente des Mobilkommunikationsnetzes (100) ein Verfahren gemäß einem der Ansprüche 1 bis 5 durchführen.

13. Computerprogrammprodukt zum Verwenden einer Maschinen-Typ-Kommunikations-Einrichtung (20) mit einem Mobilkommunikationsnetz (100), wobei das Computerprogrammprodukt ein Computerprogramm umfasst, das auf einem Speichermedium gespeichert ist, wobei das Computerprogramm Programmcode umfasst, der, wenn er auf einem Computer oder auf einer Maschinen-Typ-Kommunikations-Einrichtung (20) oder auf einer Netzkomponente eines Mobilkommunikationsnetzes (100) ausgeführt wird, bewirkt, dass der Computer oder die Maschinen-Typ-Kommunikations-Einrichtung (20) oder die Netzkomponente des Mobilkommunikationsnetzes (100) ein Verfahren gemäß einem der Ansprüche 1 bis 5 durchführen.

## Revendications

1. Procédé pour améliorer une communication de type machine entre un réseau de communication mobile (100) d'une part et un dispositif de communication de type machine (20) d'autre part, dans lequel le dispositif de communication de type machine (20) comprend un dispositif d'interface (21) et un dispositif de traitement (22),
dans lequel le dispositif d'interface (21) peut, après avoir effectué une procédure de rattachement, être rattaché au réseau de communication mobile (100) à la manière d'un équipement utilisateur du réseau de communication mobile (100),
dans lequel le dispositif de traitement (22) est configuré pour fonctionner dans un premier mode de fonctionnement et au moins un second mode de fonctionnement, dans lequel le procédé comprend les étapes suivantes :
- dans une première étape, dans le cas où le dispositif de traitement (22) est dans son premier mode de fonctionnement, le dispositif d'interface (21) reçoit un message de radiomessagerie à partir du réseau de communication mobile (100), le message de radiomessagerie étant adressé par le réseau de communication mobile (100) au dispositif d'interface (21),
- dans une seconde étape, le dispositif d'interface (21) déclenche le passage du premier mode de fonctionnement au second mode de fonctionnement du dispositif de traitement (22),
dans lequel le message de radiomessagerie adressé au dispositif d'interface (21) comprend des informations de commande liées au mode de fonctionnement du dispositif de traitement (22) ou liées à une action à effectuer par le dispositif de traitement (22), dans lequel le dispositif de traitement 22), lorsqu'il bascule dans le second mode de fonctionnement, fonctionne en fonction des informations de commande du message de radiomessagerie, **caractérisé en ce que** les informations de commande comprennent une adresse de protocole Internet, ou dans lequel une adresse de protocole Internet est stockée dans le dispositif de traitement (22) et désignée par les informations de commande, dans lequel l'action à effectuer par le dispositif de traitement (22) comprend au moins la connexion à un serveur Internet spécifique défini au moyen de l'adresse de protocole Internet.

2. Procédé selon la revendication 1, dans lequel, avant que le dispositif d'interface (21) ne reçoive le message de radiomessagerie, le dispositif d'interface (21) est dans un état rattaché au réseau de communication mobile (100).

3. Procédé selon l'une des revendications précédentes, dans lequel le premier mode de fonctionnement du dispositif de traitement (22) correspond à un mode de fonctionnement inactivé ou à un mode de puissance réduite, dans lequel le second mode de fonctionnement du dispositif de traitement (22) correspond à un mode de fonctionnement activé où une connexion de protocole Internet (connexion IP) du dispositif de traitement (22) par l'intermédiaire du réseau de communication mobile (100) est active.

4. Procédé selon l'une des revendications précédentes, dans lequel le dispositif de traitement (22), lorsqu'il bascule dans le second mode de fonctionnement, fonctionne selon un schéma prédéfini.

5. Procédé selon l'une des revendications précédentes, dans lequel le réseau de communication mobile (100) est connecté à un serveur de communication de type machine (130), le serveur de communication de type machine (130) fournissant des informations de schéma de synchronisation au réseau de communication mobile (100), dans lequel des messages de radiomessagerie sont envoyés au dispositif de communication de type machine (20) et selon le schéma de synchronisation sans impliquer le serveur de communication de type machine (130).

6. Dispositif d'interface (21) pour améliorer la communication de type machine avec un réseau de communication mobile (100), le dispositif d'interface (21) étant configuré pour être connecté à un dispositif de traitement (22) et pour former un dispositif de communication de type machine (20), dans lequel le dispositif d'interface (21) peut, après avoir effectué une procédure de rattachement, être rattaché au réseau de communication mobile (100) à la manière d'un équipement utilisateur du réseau de communication mobile (100), dans lequel le dispositif de traitement (22) est configuré pour fonctionner dans un premier mode de fonctionnement et au moins un second mode de fonctionnement, dans lequel, dans le cas où le dispositif de traitement (22) est dans son premier mode de fonctionnement et qu'une connexion de protocole Internet doit être établie entre le réseau de communication mobile (100) et le dispositif de communication de type machine (20), le dispositif d'interface (21) reçoit un message de radiomessagerie à partir du réseau de communication mobile (100), le message de radiomessagerie étant adressé, par le réseau de communication mobile (100), au dispositif d'interface (21), dans lequel le dispositif d'interface (21) est configuré pour déclencher le passage du premier mode de fonctionnement au second mode de fonctionnement du dispositif de traitement (22), dans lequel le message de radiomessagerie adressé au dispositif d'interface (21) comprend des informations de commande liées au mode de fonctionnement du dispositif de traitement (22) ou liées à une action à effectuer par le dispositif de traitement (22), dans lequel le dispositif de traitement (22), lorsqu'il bascule dans le second mode de fonctionnement, fonctionne en fonction des informations de commande du message de radiomessagerie, **caractérisé en ce que** les informations de commande comprennent une adresse de protocole Internet, ou dans lequel une adresse de protocole Internet est stockée dans le dispositif de traitement (22) et désignée par les informations de commande, dans lequel l'action à effectuer par le dispositif de traitement (22) comprend au moins la connexion à un serveur Internet spécifique défini au moyen de l'adresse de protocole Internet.

7. Dispositif de communication de type machine (20) comprenant un dispositif d'interface (21) et un dispositif de traitement (22), le dispositif de communication de type machine (20) étant prévu pour améliorer la communication de type machine avec un réseau de communication mobile (100), dans lequel le dispositif d'interface (21) peut, après avoir effectué une procédure de rattachement, être rattaché au réseau de communication mobile (100) à la manière d'un équipement utilisateur du réseau de communication mobile (100), dans lequel le dispositif de traitement (22) est configuré pour fonctionner dans un premier mode de fonctionnement et au moins un second mode de fonctionnement, dans lequel, dans le cas où le dispositif de traitement (22) est dans son premier mode de fonctionnement et qu'une connexion de protocole Internet doit être établie entre le réseau de communication mobile (100) et le dispositif de communication de type machine (20), le dispositif d'interface (21) reçoit un message de radiomessagerie à partir du réseau de communication mobile (100), le message de radiomessagerie étant adressé par le réseau de communication mobile (100) au dispositif d'interface (21), dans lequel le dispositif d'interface (21) est configuré pour déclencher le passage du premier mode de fonctionnement au second mode de fonctionnement du dispositif de traitement (22), dans lequel le message de radiomessagerie adressé au dispositif d'interface (21) comprend des informations de commande liées au mode de fonctionnement du dispositif de traitement (22) ou liées à une action à effectuer par le dispositif de traitement (22), dans lequel le dispositif de traitement (22), lorsqu'il bascule dans le second mode de fonctionnement, fonctionne en fonction des informations de commande du message de radiomessagerie, **caractérisé en ce que** les informations de commande comprennent une adresse de protocole Internet, ou dans lequel une adresse de protocole Internet est stockée dans le dispositif de traitement (22) et désignée par les informations de commande, dans lequel l'action à effectuer par le dispositif de traitement (22) comprend au moins une connexion à un serveur Internet spécifique défini au moyen de l'adresse de protocole Internet.

8. Dispositif de communication de type machine (20) selon la revendication 7, dans lequel le premier mode de fonctionnement du dispositif de traitement (22) correspond à un mode de fonctionnement inactivé ou à un mode de puissance réduite, le second mode de fonctionnement du dispositif de traitement (22) correspond à un mode de fonctionnement activé où une connexion de protocole Internet (connexion IP) du dispositif de traitement (22) par l'intermédiaire du réseau de communication mobile (100) est active.

9. Dispositif de communication de type machine (20) selon la revendication 7 ou 8, dans lequel le dispositif de traitement (22) est configuré de sorte que, lorsqu'il bascule dans le second mode de fonctionnement, il fonctionne selon un schéma prédéfini.

10. Dispositif de communication de type machine (20) selon l'une des revendications 7 à 9, dans lequel le message de radiomessagerie adressé au dispositif d'interface (21) comprend des informations de commande liées au mode de fonctionnement du dispositif de traitement (22) ou liées à une action à effectuer par le dispositif de traitement (22), dans lequel le dispositif de traitement (22) est configuré de sorte que, lorsqu'il bascule dans le second mode de fonctionnement, il fonctionne en fonction des informations de commande du message de radiomessagerie.

11. Réseau de communication mobile (100) pour améliorer la communication de type machine avec un dispositif de communication de type machine (20), dans lequel le dispositif de communication de type machine (20) comprend un dispositif d'interface (21) et un dispositif de traitement (22), dans lequel le dispositif d'interface (21) peut, après avoir effectué une procédure de rattachement, être rattaché au réseau de communication mobile (100) à la manière d'un équipement utilisateur du réseau de communication mobile (100), dans lequel le dispositif de traitement (22) est configuré pour fonctionner dans un premier mode de fonctionnement et au moins dans un second mode de fonctionnement, dans lequel, dans le cas où le dispositif de traitement (22) est dans son premier mode de fonctionnement et qu'une connexion de protocole Internet doit être établie entre le réseau de communication mobile (100) et le dispositif de communication de type machine (20), le réseau de communication mobile (100) génère un message de radiomessagerie adressé au dispositif d'interface (21), dans lequel le dispositif d'interface (21) est configuré pour déclencher le passage du premier mode de fonctionnement au second mode de fonctionnement du dispositif de traitement (22), dans lequel le message de radiomessagerie adressé au dispositif d'interface (21) comprend des informations de commande liées au mode de fonctionnement du dispositif de traitement (22) ou liées à une action à effectuer par le dispositif de traitement (22), dans lequel le dispositif de traitement (22), lorsqu'il bascule dans le second mode de fonctionnement, fonctionne en fonction des informations de commande du message de radiomessagerie, **caractérisé en ce que** les informations de commande comprennent une adresse de protocole Internet, ou dans lequel une adresse de protocole Internet est stockée dans le dispositif de traitement (22) et désignée par les informations de commande, dans lequel l'action à effectuer par le dispositif de traitement (22) comprend au moins la connexion à un serveur Internet spécifique défini au moyen de l'adresse de protocole Internet.

12. Programme comprenant un code de programme lisible par ordinateur qui, lorsqu'il est exécuté sur un ordinateur ou un dispositif de communication de type machine (20) ou sur un composant de réseau d'un réseau de communication mobile (100), amène l'ordinateur ou le dispositif de communication de type machine (20) ou le composant de réseau du réseau de communication mobile (100) à exécuter un procédé selon l'une des revendications 1 à 5.

13. Produit de programme informatique pour utiliser un dispositif de communication de type machine (20) avec un réseau de communication mobile (100), le produit de programme informatique comprenant un programme informatique stocké sur un support de stockage, le programme informatique comprenant un code de programme qui, lorsqu'il est exécuté sur un ordinateur ou sur un dispositif de communication de type machine (20) ou sur un composant de réseau d'un réseau de communication mobile (100), amène l'ordinateur ou le dispositif de communication de type machine (20) ou le composant de réseau du réseau de communication mobile (100) à exécuter un procédé selon l'une des revendications 1 à 5.
